# EUROPÄISCHE PATENTSCHRIFT

(11) **EP 4 111 232 B1**
(45) Veröffentlichungstag und Bekanntmachung des Hinweises auf die Patenterteilung: **01.04.2026**
(21) Anmeldenummer: 21705902.1
(22) Anmeldetag: 11.02.2021
(51) Int. Cl.: B60Q 1/08, G01S 17/89, G01S 17/931, G06V 10/141, G06V 20/56, G08G 1/16, B60W 30/12

(54) **UMGEBUNGSERKENNUNGSSYSTEM EINES KRAFTFAHRZEUGS, VERFAHREN ZUM BETRIEB EINES UMGEBUNGSERKENNUNGSSYSTEMS, COMPUTERPROGRAMMPRODUKT SOWIE KRAFTFAHRZEUG**
ENVIRONMENT RECOGNITION SYSTEM OF A MOTOR VEHICLE, METHOD FOR OPERATING AN ENVIRONMENT RECOGNITION SYSTEM, COMPUTER PROGRAMME PRODUCT, AND MOTOR VEHICLE
SYSTÈME DE RECONNAISSANCE D'ENVIRONNEMENT D'UN VÉHICULE À MOTEUR, PROCÉDÉ DE FONCTIONNEMENT D'UN SYSTÈME DE RECONNAISSANCE D'ENVIRONNEMENT, PRODUIT-PROGRAMME INFORMATIQUE ET VÉHICULE À MOTEUR

(30) Priorität: 24.02.2020 DE 102020202329
(43) Veröffentlichungstag der Anmeldung: 04.01.2023
(73) Patentinhaber: Stellantis Auto SAS, 78300 Poissy (FR)
(72) Erfinder: WITTORF, Marten, 65428 Rüsselsheim am Main (DE); ROECKL, Philipp, 65428 Rüsselsheim am Main (DE)
(74) Vertreter: ESIP
(86) Internationale Anmeldenummer: PCT/EP2021/053373
(87) Internationale Veröffentlichungsnummer: WO 2021/170419

(56) Entgegenhaltungen:
- US-A1- 2016 034 771
- US-A1- 2016 034 771
- US-A1- 2019 095 726
- US-A1- 2019 095 726

## Beschreibung

Vorliegend werden ein Umgebungserkennungssystem eines Kraftfahrzeugs, ein Verfahren zum Betrieb eines Umgebungserkennungssystems, ein Computerprogrammprodukt sowie ein Kraftfahrzeug beschrieben.

Umgebungserkennungssysteme eines Kraftfahrzeugs, Verfahren zum Betrieb eines Umgebungserkennungssystems, Computerprogrammprodukte sowie Kraftfahrzeuge
der eingangs genannten Art sind im Stand der Technik bekannt.

Umgebungserkennungssysteme werden in Kraftfahrzeugen zu verschiedenen Zwecken verwendet, unter anderem für autonome Fahrsysteme und für Fahrassistenzsysteme wie Tempolimitwarner, die Tempolimits von Schildern ablesen, und Spurassistenzsysteme, die Spurmarkierungen erkennen müssen.

Darüber hinaus sind Lichtprojektionssysteme in Kraftfahrzeugen bekannt, die Lichtstrukturen erzeugen und in die Umgebung projizieren können, z.B. auf Schilder, Wände oder Fahrbahnen.

Eine bereits erwähnte Anwendung sind Spurassistenzsysteme. Eine erste bekannte Art sind aktive Spurassistenzsysteme, die einen Fahrer eines entsprechend ausgerüsteten Kraftfahrzeugs aktiv unterstützen. Solche Systeme verwenden Eingriffe in eine Lenkung, beispielsweise um einen unbeabsichtigten Spurwechsel zu verhindern, also ein Spurwechsel ohne Anzeige eines Spurwechselwillens durch Betätigung eines Blinkers seitens des Fahrers. Auch passive, also rein warnende Systeme sind bekannt, beispielsweise solche, die eine Vibration in einem Lenkrad erzeugen und damit einen Fahrer darauf aufmerksam machen, dass er bei Weiterfahrt in die gleiche Richtung die Spur verlassen wird. Des Weiteren sind Spurassistenzsysteme bekannt, die beide zuvor genannten Systeme kombinieren und den Fahrer durch optische Projektionen auf die Straße unterstützen, beispielsweise, indem durchgezogene oder nicht durchgezogene Linien auf die Straße projiziert werden. So kann beispielsweise eine nicht durchgezogene Linie mit einer Projektion einer durchgezogenen Linie überdeckt werden, wenn ein gefahrloser Spurwechsel nicht möglich ist, beispielsweise aufgrund eines anderen Kraftfahrzeugs auf einer Zielspur. Des Weiteren sind Kombinationen der vorgenannten Arten von Spurassistenzsystemen bekannt.

Bei den letztgenannten Systemen, die mit Projektionen arbeiten, kann es vorkommen, dass die Projektion mit einem System zur Umgebungserkennung, beispielsweise mittels einer Frontkamera interferiert, sodass die Projektion eine zu erkennende Struktur überstrahlt, z.B. vom optischen Umgebungserkennungssystem mit einer tatsächlichen Spurmarkierung verwechselt werden kann oder die Spurmarkierung als nicht erkennbar gekennzeichnet wird.

Aus der US 2019/293791 A1 ist eine Bildaufnahme-Kontrollvorrichtung zur Erkennung
und Entfernungsauswertung eines Ziels für Fahrzeuge bekannt. Die Vorrichtung besteht aus einer Infrarot-Lichtbestrahlungseinheit zur Beleuchtung eines Zieles und aus einer Infrarot-Lichtdetektor-Empfangseinheit und einer Empfangseinheit für sichtbares Licht zum Empfang des vom Ziel reflektierten Lichtsignals. Das vom Ziel reflektierte infrarote und sichtbare Licht wird zur Bewertung der Entfernung zum Ziel, zur Abbildung der Kontur des Ziels und zur Erkennung von Gegenlicht, Nebel und Farbe verwendet. Die Feinabstimmung der Einstrahlungs- und Empfangslichtbedingungen ermöglicht die Unterscheidung dieser Parameter nach Analyse der Überlagerung von Einstrahlungs- und reflektierten Signalen während der Belichtungszeiten. Die Feinabstimmung wird von einer Steuerung vorgenommen, wenn die Erkennungseinheit festgestellt hat, dass die periphere Situation einer vorgegebenen Situation entspricht. Das Gerät erzeugt sichtbare Licht-, IR- und Entfernungsbilddaten sowie eine Objekt-ID.

Die US 2019/095726 A1 beschreibt ein Erkennungsunterstützungssystem für ein Fahrzeug, mit einer Markierungslichteinrichtung zur Projektion einer Markierung und einer Kameraeinrichtung bekannt. Die Markierungslichteinrichtung ist getaktet ansteuerbar, wobei eine Frequenz, mit der eine Markierung projiziert wird, auf eine Bildfrequenz der Kamera abgestimmt ist.

Aus der US 2016/034771 A1 ist ein Verfahren und System zum Abtasten einer Fahrbahnoberfläche bekannt, wobei ein strukturiertes Lichtmuster in einen Pfard des Fahrzeugs projiziert wird, das von einer Kamera erfasst und anschließen ausgewertet wird.

Somit stellt sich die Aufgabe, Umgebungserkennungssysteme eines Kraftfahrzeugs, Verfahren zum Betrieb eines Umgebungserkennungssystems, Computerprogrammprodukte sowie Kraftfahrzeuge der eingangs genannten Art dahingehend weiterzubilden, dass Umgebungserkennungssysteme, die Projektoren zur Abgabe von Lichtstrukturen aufweisen, Spurmarkierungen auf einer Straße zuverlässiger erkennen können.

Die Aufgabe wird gelöst durch ein Umgebungserkennungssystem eines Kraftfahrzeugs gemäß Anspruch 1, ein Verfahren zum Betrieb eines Umgebungserkennungssystems gemäß dem nebengeordneten Anspruch 6, ein Computerprogrammprodukt gemäß dem nebengeordneten Anspruch 10 sowie ein Kraftfahrzeug gemäß dem nebengeordneten Anspruch 11. Weiterführende Ausgestaltungen und Weiterbildungen sind Gegenstand der abhängigen Ansprüche.

Nachfolgend wird ein Umgebungserkennungssystem eines Kraftfahrzeugs beschrieben, mit wenigstens einem Projektor, der dazu eingerichtet ist, linienhafte Lichtstrukturen auf einen Bereich einer Fahrbahn vor dem Kraftfahrzeug zu projizieren, und wenigstens einer Kamera, die derart angeordnet ist, dass sie einen Bereich vor dem Kraftfahrzeug erfasst, wobei die Kamera sensitiv für wenigstens einen Teilbereich des von dem wenigstens einen Projektors ausgegebenen Frequenzspektrums ist, um Reflexionen des von dem Projektor auf den Bereich der Fahrbahn projizierten Lichtes zu erfassen, wobei der Projektor eine modulierbare Leuchtmittelanordnung aufweist, wobei eine Steuerung vorgesehen ist, die mit der wenigstens einen Kamera und dem wenigstens einen Projektor verbunden ist, wobei wenigstens ein Timer vorgesehen ist, um den Projektor und Kamera zu takten, wobei der Projektor vom Timer gesteuert gepulst betrieben wird.

Die Steuerung weist ein Auswertemodul für Kameradaten auf, das dazu eingerichtet ist, Kameradaten von einem ersten Pulszustand und von einem zweiten Pulszustand getrennt voneinander auszuwerten. Das Auswertemodul ist ferner ausgebildet, überlappende Bereiche in den wenigstens zwei Kameraaufnahmen zu identifizieren und Spurmarkierungen in den Kameraaufnahmen zu erkennen.

Die Steuerung ist ausgebildet, eine Veränderung der Lichtstrukturen vorzunehmen, wenn ein Zuversichtsniveau für die Erkennung von Spurmarkierungen unter einen vorgegebenen Wert sinkt.

Die Kameradaten können Kamerabilder sein, sie können aber auch strukturierte Daten enthalten, zum Beispiel erkannte Gegenstände.

Das Objekt kann beispielsweise ein Schild, eine Mauer oder eine Fahrbahn sein. Die Lichtstruktur kann unter anderem linienhaft oder flächenhaft sein.

Dadurch, dass Projektor und Kamera aufeinander abgestimmt getaktet werden, wobei der Projektor gepulst betrieben wird, kann ermöglicht werden, dass die Kamera die von dem Projektor abgegebene Lichtstruktur spezifisch entsprechend der gepulsten Wiedergabe wahrnehmen kann, wodurch ermöglicht wird, dass Spurmarkierungen auf der Straße von den gepulsten Lichtstrukturen unterschieden werden können.

In einer ersten weiterführenden Ausgestaltung kann vorgesehen sein, dass die Steuerung ein Lichtmodulationsmodul aufweist, das dazu eingerichtet ist, das von dem Projektor emittierte Licht zu modulieren, sodass der Projektor wenigstens eine erste Lichtstruktur und wenigstens eine von der ersten Lichtstruktur unterschiedliche zweite Lichtstruktur emittieren kann, wobei das Umschalten zwischen erster Lichtstruktur und zweiter Lichtstruktur mittels des Timers gesteuert ist.

Wenn unterschiedliche Lichtstrukturen verwendet werden, die mittels des Timers angesteuert werden, ist es möglich, eine erste Lichtstruktur und eine zweite Lichtstruktur eindeutig voneinander zu unterscheiden. Durch das Timing mittels des Timers ist es möglich, einen zeitlichen Zusammenhang zwischen den Wechsel zwischen den verschiedenen Lichtstrukturen und den Bildern der Kameraaufnahmen herzustellen.

Wenn Kameradaten des ersten Pulszustandes und Kameradaten des zweiten Pulszustandes getrennt voneinander ausgewertet werden, ist es möglich, die Unterschiede der ausgewerteten Kameradaten miteinander zu vergleichen und dabei Gemeinsamkeiten sowie Unterschiede zwischen den beiden ausgewerteten Kameradaten festzustellen. Hieraus lassen sich zuverlässigere Rückschlüsse über in den jeweiligen Kameradaten enthaltenen Informationen zu Spurmarkierungen ziehen. Die Kameradaten können Kamerabilder und oder mit Objektinformationen angereicherte Kamerabilder darstellen.

In einer weiteren weiterführenden Ausgestaltung kann vorgesehen sein, dass die Steuerung ein Auswertemodul für Kameradaten aufweist, das dazu eingerichtet ist, Kameradaten der ersten Lichtstruktur und der zweiten Lichtstruktur getrennt voneinander auszuwerten.

Wenn Kameradaten der ersten Lichtstruktur und Kameradaten der zweiten Lichtstruktur getrennt voneinander ausgewertet werden, ist es möglich, die Unterschiede der ausgewerteten Kameradaten miteinander zu vergleichen und dabei Gemeinsamkeiten sowie Unterschiede zwischen den beiden ausgewerteten Kameradaten festzustellen. Hieraus lassen sich zuverlässigere Rückschlüsse über in den jeweiligen Kameradaten enthaltenen Informationen zu Spurmarkierungen ziehen. Die Kameradaten können Kamerabilder und oder mit Objektinformationen angereicherte Kamerabilder darstellen.

In einer weiteren weiterführenden Ausgestaltung kann vorgesehen sein, dass ein Lichttimer für den Projektor und ein Abtastratentimer für die Kamera vorgesehen ist.

Wenn ein Lichttimer für den Projektor und ein Abtastratentimer für die Kamera vorgesehen sind, ist es möglich, das System modularer aufzubauen. So kann beispielsweise auf einen Abtastratentimer in der Kamera zurückgegriffen werden, der von der Steuerung entsprechend angesprochen wird. Auch Lichttimer sind häufiger Bestandteil von Lichtmodulen. Entsprechende Lichttimer können ebenfalls von der Steuerung angesprochen werden.

In einer weiteren weiterführenden Ausgestaltung kann vorgesehen sein, dass eine Taktfrequenz des Lichttimers ein ganzzahliges Vielfaches einer Taktfrequenz des Abtastratentimers oder eine Taktfrequenz des Abtastratentimers ein ganzzahliges Vielfaches einer Taktfrequenz des Lichttimers ist.

Wenn die Taktfrequenz des Lichttimers ein ganzzahliges Vielfaches der Taktfrequenz des Abtastratentimers ist, oder umgekehrt, ist es möglich, den Projektor die Kamera entsprechend zu synchronisieren, dass beispielsweise eine Aufzeichnung eines Bildes immer dann stattfindet, wenn der Projektor gerade nicht leuchtet, sodass das von der Kamera aufgenommene Bild nicht von der von dem Projektor erzeugt Lichtstruktur gestört ist. Damit ist ein Identifizieren der Spurmarkierung möglich.

In einer darüber hinausgehenden weiteren weiterführenden Ausgestaltung kann vorgesehen sein, dass Lichttimer und Abtastratentimer synchronisiert sind. Insbesondere kann vorgesehen sein, dass ein Kamerabild immer dann erzeugt wird, wenn der Projektor gerade keine Lichtstruktur emittiert.

In einer weiteren weiterführenden Ausgestaltung kann vorgesehen sein, dass eine Taktfrequenz des Lichttimers ein nicht ganzzahliges Vielfaches einer Taktfrequenz des Abtastratentimers oder eine Taktfrequenz des Abtastratentimers ein nicht ganzzahliges Vielfaches einer Taktfrequenz des Lichttimers ist.

Wenn die entsprechenden Taktfrequenzen nicht ganzzahlige Vielfache der jeweils anderen Taktfrequenzen sind, überlappen die Takte jeweils mit variierendem Überlapp. So werden Kameraaufnahmen erzeugt, bei denen die Lichtstruktur in voller Helligkeit, gar nicht und/oder in abgeschwächter Helligkeit zu sehen sind. Diese Varianz erlaubt es, Unterschiede und Gemeinsamkeiten in aufeinanderfolgenden Aufnahmen der Kamera zu identifizieren und dadurch Spurmarkierungen zuverlässiger zu erkennen.

Ein erster unabhängiger Gegenstand betrifft ein Verfahren zum Betrieb eines Umgebungserkennungssystem s eines Kraftfahrzeugs der vorgenannten Art, wobei eine Lichtstruktur mit einem Projektor auf einen Bereich einer Fahrbahn vor dem Kraftfahrzeug projiziert wird, wobei der Projektor gepulst betrieben wird, wobei von der wenigstens einen Kamera Aufnahmen von dem Bereich vor dem Kraftfahrzeug aufgenommen werden, wobei wenigstens eine Kameraaufnahme in einem ersten Pulszustand von der Steuerung ausgewertet wird, wobei wenigstens eine Kameraaufnahme in einem zweiten Pulszustand von der Steuerung ausgewertet wird, wobei Unterschiede zwischen der Kameraaufnahmen des ersten Pulszustand und des zweiten Pulszustands erkannt und ausgewertet werden.

In den wenigstens zwei Kameraaufnahmen werden überlappende Bereiche in den identifiziert und Spurmarkierungen in den Kameraaufnahmen erkannt, wobei eine Veränderung der Lichtstruktur vorgenommen wird, wenn ein Zuversichtsniveau für die Erkennung von Spurmarkierungen unter einen vorgegebenen Wert sinkt.

Mithilfe des entsprechenden Verfahrens ist es möglich, zuverlässig Spurmarkierungen, auf Straßen zu erkennen, selbst wenn eine Lichtstruktur mithilfe eines Projektors auf der Spurmarkierung projiziert wird.

Durch Erkennen überlappender Bereiche können zwei verschiedene Aufnahmen passend zueinander ausgerichtet werden und das Erkennen von Spurmarkierungen anhand der unterschiedlichen Lichtstrukturen ist mit höherer Zuverlässigkeit möglich.

Dann kann das Verfahren situativ gesteuert nur dann durchgeführt werden, wenn die Spurmarkierung nicht zuverlässig erkannt werden kann.

In einer ersten weiterführenden Ausgestaltung kann vorgesehen sein, dass
In einer weiteren weiterführenden Ausgestaltung kann vorgesehen sein, dass in einem gegebenen Zeitintervall der erste Pulszustand für 90 % bis 99 % der Zeit vorherrscht, wobei der zweite Pulszustand für die verbleibende Zeit vorherrscht.

Somit ist es möglich, für einen Fahrer ein ruhig und stetig wirkendes Bild der Lichtstruktur zu erzeugen.

In einer weiteren weiterführenden Ausgestaltung kann vorgesehen sein, dass eine Abtastrate der wenigstens einen Kamera mit einer Taktfrequenz des Projektors synchronisiert wird.

Wenn die Taktfrequenz des Lichttimers synchronisiert ist, also ein ganzzahliges Vielfaches der Taktfrequenz des Abtastratentimers ist, oder umgekehrt, ist es möglich, den Projektor die Kamera entsprechend zu synchronisieren, dass beispielsweise eine Aufzeichnung eines Bildes immer dann stattfindet, wenn der Projektor gerade nicht leuchtet, sodass das von der Kamera aufgenommene Bild nicht von der von dem Projektor erzeugt Lichtstruktur gestört ist. Damit ist ein Identifizieren der Spurmarkierung möglich.

In einer darüber hinausgehenden weiteren weiterführenden Ausgestaltung kann vorgesehen sein, dass Lichttimer und Abtastratentimer synchronisiert sind. Insbesondere kann vorgesehen sein, dass ein Kamerabild immer dann erzeugt wird, wenn der Projektor gerade keine Lichtstruktur emittiert.

In einer weiteren weiterführenden Ausgestaltung kann vorgesehen sein, dass eine Abtastrate der wenigstens einen Kamera und eine Taktfrequenz des Projektors asynchron sind.

Wenn die entsprechenden Taktfrequenzen asynchron sind, also nicht ganzzahlige Vielfache der jeweils anderen Taktfrequenzen sind, überlappen die Takte jeweils mit variierendem Überlapp. So werden Kameraaufnahmen erzeugt, bei denen die Lichtstruktur in voller Helligkeit, gar nicht und/oder in abgeschwächter Helligkeit zu sehen sind. Diese Varianz erlaubt es, Unterschiede und Gemeinsamkeiten in aufeinanderfolgenden Aufnahmen der Kamera zu identifizieren und dadurch Spurmarkierungen zuverlässiger zu erkennen.

Ein erster unabhängiger Gegenstand betrifft eine Vorrichtung zum Betrieb eines Umgebungserkennungssystem der vorgenannten Art, wobei Mittel zum gepulsten Betreiben des Projektors vorgesehen sind, wobei eine Kamera vorgesehen ist, um Aufnahmen von dem Bereich vor dem Kraftfahrzeug aufzunehmen, wobei eine Steuerung vorgesehen ist, um wenigstens eine Kameraaufnahme in einem ersten Pulszustand und wenigstens eine Kameraaufnahme in einem zweiten Pulszustand auszuwerten, wobei die Steuerung dazu eingerichtet ist, Unterschiede zwischen der Kameraaufnahme des ersten Pulszustandes und der Kameraaufnahme des zweiten Pulszustands zu erkennen und auszuwerten.

Ein weiterer unabhängiger Gegenstand betrifft ein Computerprogrammprodukt, mit einem computerlesbaren Speichermedium, auf dem Befehle eingebettet sind, die, wenn sie von wenigstens einer Steuerung eines Umgebungserkennungssystems ausgeführt werden, bewirken, dass die wenigstens Steuerung dazu eingerichtet ist, das Verfahren der vorgenannten Art auszuführen.

Das Verfahren kann auf einer oder auf mehreren Recheneinheiten verteilt ausgeführt werden, sodass bestimmte Verfahrensschritte auf der einen Recheneinheit und andere Verfahrensschritte auf wenigstens einer weiteren Recheneinheit ausgeführt werden, wobei berechnete Daten sofern notwendig zwischen den Recheneinheiten übermittelt werden können.

Ein weiterer unabhängiger Gegenstand betrifft ein Kraftfahrzeug mit einem Umgebungserkennungssystem der zuvor beschriebenen Art.

Weitere Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen. Dabei zeigen schematisch:
- Fig. 1: eine Draufsicht auf ein Kraftfahrzeug mit einem Umgebungserkennungssystem;
- Fig. 2: eine Steuerung des Umgebungserkennungssystems des Kraftfahrzeugs aus Fig. 1;
- Fig. 3: eine Draufsicht auf eine Straße mit dem Kraftfahrzeug aus Fig. 1;
- Fig. 4: zwei Zeit-Intensitäts-Diagramme einer ersten Ausführungsform, sowie
- Fig. 5: zwei Zeit-Intensitäts-Diagramme einer zweiten Ausführungsform.

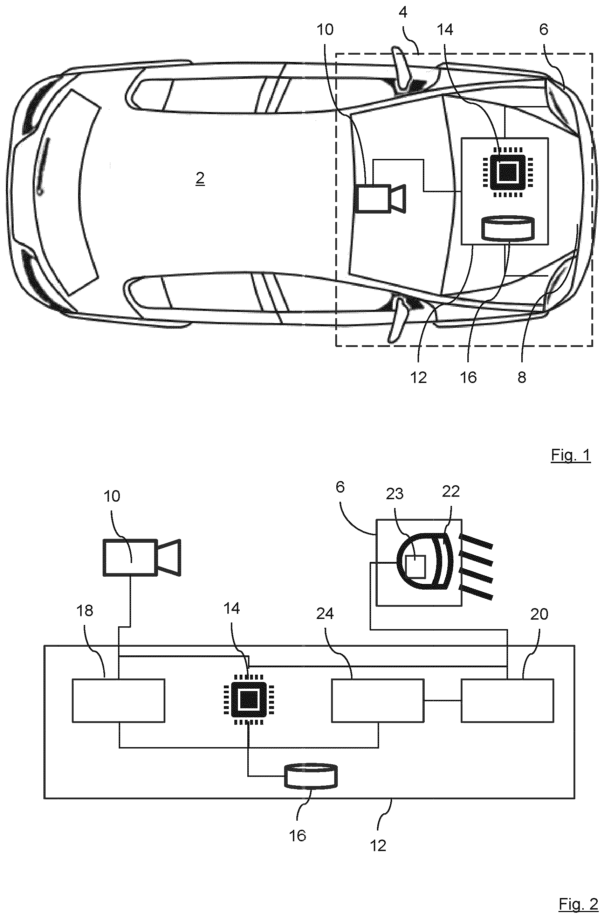

Fig. 1 zeigt eine Draufsicht auf ein Kraftfahrzeug 2 mit einem Umgebungserkennungssystem 4 (Bestandteile des Umgebungserkennungssystems 4 gestrichelt umrahmt).

Das Umgebungserkennungssystem 4 weist in Fig. 1 nicht sichtbare Projektoren auf, die in Scheinwerfern 6, 8 angeordnet sind. Die Projektoren in den Scheinwerfern 6, 8 sind dazu eingerichtet, linienhafte Strukturen mit ausreichend hohem Kontrast auf ein Objekt zu projizieren, sodass diese von einem Fahrer wahrnehmbar und unterscheidbar sind. Damit kann dem Fahrer des Kraftfahrzeugs 2 eine Hilfestellung beim Spurwechsel gegeben werden und zum Beispiel anzeigen, wann eine Spur gewechselt werden kann, zum Beispiel durch eine projizierte gestrichelte Linie, und wann nicht, zum Beispiel durch eine projizierte durchgezogene Linie, wenn eine Gefahr erkannt wurde. Auch kann das Umgebungserkennungssystem anzeigen, wo sich die Spurmarkierung befindet, beispielsweise bei schlechten Sichtverhältnissen wie bei Schnee bedeckter Fahrbahn, und dergleichen mehr.

Das Umgebungserkennungssystem 4 weist des Weiteren eine nach vorne ausgerichtete Kamera 10 auf, die einen Bereich einer Fahrbahn vor dem Kraftfahrzeug 2 erfassen kann.

Die Scheinwerfer 6, 8 sowie die Kamera 10 sind mit einer Steuerung 12 verbunden, wobei die Steuerung 12 eine Recheneinheit 14 sowie einen Speicher 16 aufweist. In dem Speicher 16 ist ein Computerprogrammprodukt gespeichert, das, wenn es von der Recheneinheit 14 geladen und ausgeführt wird, das hier beschriebene Verfahren durchführt.

Mithilfe der Kamera 10 werden Aufnahmen von der vor dem Kraftfahrzeug 2 liegenden Straße gemacht und in der Steuerung 12, ausgewertet, indem Spurmarkierungen, die auf der Straße aufgezeichnet sind, erkannt werden. In einem alternativen Ausführungsbeispiel kann diese Auswertung in der Kamera 10 vorgenommen werden. Dazu kann spezielle Hardware verwendet werden, zum Beispiel spezielle Grafikprozessoren, die auf Bildanalyse und Objekterkennung spezialisiert sind.

Die von den Projektoren erzeugten und auf die Straße projizierten Lichtstrukturen, beispielsweise Linien, können die Spurmarkierungen überdecken, sodass die Projektionen eine Erkennung der Spurmarkierungen zumindest der Art der Spurmarkierung nach durch Kamera 10 oder Steuerung 12 verhindern können.

Für diesen Fall ist es möglich, die Lichtstrukturen hinsichtlich ihrer physikalischen Eigenschaften so abzuändern, dass eine Erkennung von Spurmarkierungen in den von der Kamera 10 aufgenommenen Bildern möglich ist. In dem hier vorgestellten Ausführungsbeispiel findet ein Wechsel zwischen unterschiedlichen Lichtstrukturen in regelmäßigen Zeitabständen statt.

In alternativen Ausführungsformen kann es möglich sein, eine Veränderung der physikalischen Eigenschaften der Lichtstruktur nur dann vorzunehmen, wenn ein Zuversichtsniveau der Erkennung von Spurmarkierungen durch die entsprechenden projizierten Lichtstrukturen zu weit absinkt, beispielsweise unter einen Schwellwert von 95 %.

Fig. 2 zeigt eine Prinzipdarstellung der Steuerung 12.

Die nachfolgend dargestellten Module können Programmbestandteile des zuvor erwähnten Computerprogrammproduktes sein. In alternativen Ausgestaltungen können die Module ganz oder teilweise durch dedizierte Bauteile, beispielsweise Prozessoren und/oder Platinen verwirklicht sein.

Die Kamera 10 ist mit einem Auswertemodul 18 der Steuerung 12 verbunden. Das Auswertemodul 18 dient zur Analyse der Bildinformationen und zur Erkennung der entsprechenden Spurmarkierungen.

Des Weiteren ist ein Lichtmodulationsmodul 20 vorgesehen, das einen Projektor ansteuert. Der Projektor 22 ist in dem Scheinwerfer 6 angeordnet.

Der Projektor 22 weist eine Matrix von Leuchtmitteln 23 auf, die von den Lichtmodulationsmodul 20 einzelnen an- und ausgeschaltet werden können. Die entsprechenden Leuchtmittel sind dimmbar, können also unterschiedliche Helligkeiten abgeben. Die Leuchtmittel können in anderen Ausgestaltungen auch farbvariabel sein.

Des Weiteren ist ein Timer 24 vorgesehen, der mit dem Auswertemodul 18 und dem Lichtmodulationsmodul 20 verbunden ist.

Auswertemodul 18, Lichtmodulationsmodul 20, Timer 24 und Speicher 16 sind mit der Recheneinheit 14 verbunden. Von der Kamera 10 aufgenommenen Bilder werden von dem Auswertemodul 18 aufbereitet und die ausgewerteten Bilder, die mit Objektinformationen zu in den aufgenommenen Bilder identifizierten Objekten angereichert sind, an die Recheneinheit 14 übergeben. Die Recheneinheit 14 legt diese Informationen kurzfristig im Speicher 16 ab.

Sodann wird durch die Recheneinheit 14 eine Veränderung der Lichtstruktur ausgelöst, in dem das Lichtmodulationsmodul 20 entsprechend angesteuert wird, wodurch der Projektor 22 eine geänderte Lichtstruktur abgibt.

Die Kamera 10 nimmt ein weiteres Bild mit der entsprechend geänderten Lichtstruktur auf, die Aufnahme wird durch das Auswertemodul 18 wie zuvor beschrieben aufbereitet und an die Recheneinheit 14 übergeben. Das weitere Bild kann ebenfalls in dem Speicher 16 abgelegt oder zwischengespeichert werden.

Die Recheneinheit 14 kann anschließend dann die Daten zur ersten Aufnahme und ggf. zweiten Aufnahme aus dem Speicher 16 abrufen und die beiden Datensätze miteinander vergleichen.

Dabei wird ein Versatz der beiden Aufnahmen, der durch eine durch die Fahrt des Kraftfahrzeugs 2 entstehenden anderen Aufnahmeort entsteht, kompensiert werden, indem aus Zeitabstand der beiden Aufnahmen und Fahrgeschwindigkeit des Kraftfahrzeugs 2 unter Berücksichtigung der optischen Eigenschaften der Kamera 10 ein Versatz bestimmt wird und eine der beiden Aufnahmen relativ zur anderen um den Versatz verschoben wird. Falls erforderlich, kann zusätzlich eine Bildverzerrung korrigiert werden.

In einem alternativen Ausführungsbeispiel kann der Versatz durch Bilderkennung kompensiert werden.

Die darin gefundenen Unterschiede erlauben die Erkennung der Lichtstrukturen und die Unterscheidung der Lichtstrukturen von den Spurmarkierungen auf der Straße, sodass eine zuverlässige Erkennung der Spurmarkierungen möglich ist.

Der Timer 24 steuert sowohl die Kamera 10 über das Auswertemodul 18 sowie auch den Projektor 22 über das Lichtmodulationsmodul 20. Der Timer 24 ist somit eine Master-Clock, die ein synchrones oder asynchrones Betreiben von Kamera 10 und Projektor 22 ermöglicht.

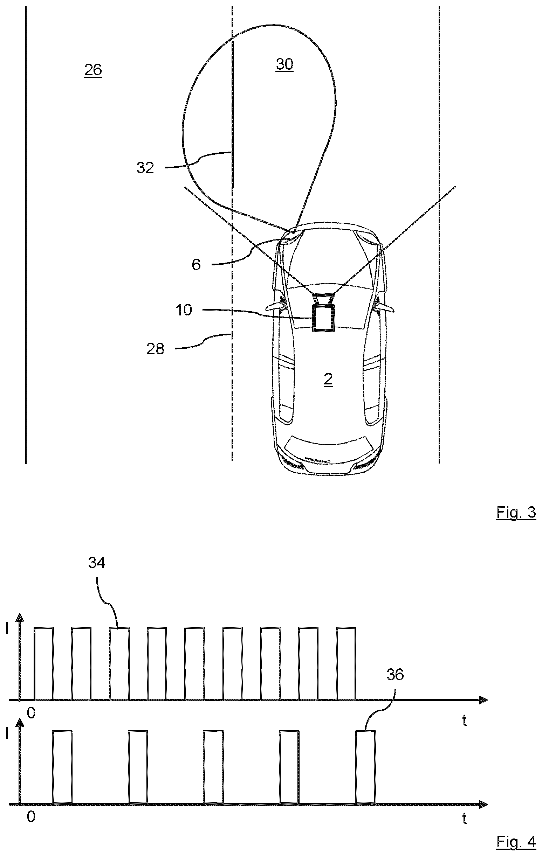

Fig. 3 zeigt eine Darstellung des Kraftfahrzeugs 2 aus Fig. 1 auf einer Straße 26.

Die Straße 26 weist eine Spurmarkierung 28 auf, die von der Kamera 10 des Umgebungserkennungssystems 4 erkannt wird.

Das Kraftfahrzeug 2 emittiert über den Scheinwerfer 6 einen Lichtkegel 30 und über den darin angeordneten Projektor 22 eine Lichtstruktur 32, hier eine durchgezogene Linie, auf der Höhe der Spurmarkierung 28. Je nach Farbe und Helligkeit kann es für die Kamera 10 durch die Lichtstruktur 32 unmöglich werden, die Art der Spurmarkierung 28 zuverlässig zu erkennen.

Durch die Variation der Lichtstruktur 32 durch den gepulsten Betrieb der Leuchtmittel 23 des Projektors 22, kann erreicht werden, dass sich die Spurmarkierung 28 von der Lichtstruktur abhebt.

Fig. 4 zeigt zwei Intensität-Zeit-Diagramme gemäß einem ersten Ausführungsbeispiel. Die beiden Diagramme sind untereinander dargestellt.

Das obere Diagramm stellt eine Abtastrate 34 der Kamera 10 und das untere Diagramm eine Pulsrate 36 des Projektors 22 dar. Die Pulsrate 36 ist ein ganzzahliges Vielfaches der Abtastrate 34.

Abtastrate 34 und Pulsrate 36 sind so miteinander synchronisiert, dass die Pulse des Projektors 22 stets in einen Zeitraum fallen, in dem die Kamera 10 nicht abtastet, sodass die Kamera 10 stets ein Bild aufnimmt, dass keinen Anteil der Lichtstruktur 32 enthält, da zu den jeweiligen Aufnahmezeitpunkten der Projektor 22 kein Licht emittiert.

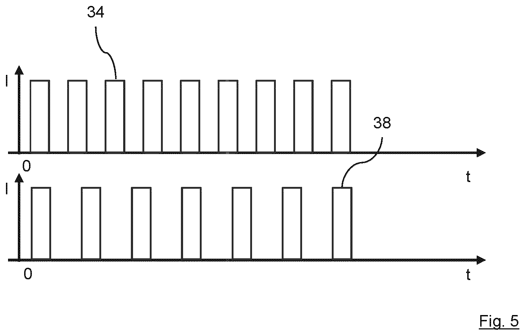

Fig. 5 zeigt zwei Intensität-Zeit-Diagramme gemäß einem zweiten Ausführungsbeispiel.

In Fig. 5 ist eine Pulsrate 38 asynchron zu einer Abtastrate 34 und ein Verhältnis aus Abtastrate und Pulsrate ist nicht ganzzahlig. Dadurch nimmt die Kamera 10 Aufnahmen auf, in denen teilweise keine Lichtstruktur zu sehen ist, teilweise eine Lichtstruktur 32 mit voller Helligkeit und teilweise eine Lichtstruktur 32 mit reduzierter Helligkeit, da diese nur einen Teil der Aufnahmezeit sichtbar ist und damit dunkler wirkt. Hieraus kann die Steuerung 12 die Spurmarkierung 28 erkennen.

Obwohl der Gegenstand im Detail durch Ausführungsbeispiele näher illustriert und erläutert wurde, so ist die Erfindung nicht durch die offenbarten Beispiele eingeschränkt und andere Variationen können vom Fachmann hieraus abgeleitet werden. Es ist daher klar, dass eine Vielzahl von Variationsmöglichkeiten existiert. Es ist ebenfalls klar, dass beispielhaft genannte Ausführungsformen nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

### Bezugszeichenliste

- 2: Kraftfahrzeug
- 4: Umgebungserkennungssystem
- 6: Scheinwerfer
- 8: Scheinwerfer
- 10: Kamera
- 12: Steuerung
- 14: Recheneinheit
- 16: Speicher
- 18: Auswertemodul
- 20: Lichtmodulationsmodul
- 22: Projektor
- 23: Leuchtmittel
- 24: Timer
- 26: Straße
- 28: Spurmarkierung
- 30: Lichtkegel
- 32: Lichtstruktur
- 34: Abtastrate
- 36: Pulsrate
- 38: Pulsrate

- I: Intensität
- t: Zeit

## Patentansprüche

1. Umgebungserkennungssystem eines Kraftfahrzeugs (2) mit wenigstens einem Projektor (22), der dazu eingerichtet ist, linienhafte Lichtstrukturen (32) auf einen Bereich einer Fahrbahn(36) vor dem Kraftfahrzeug (2) zu projizieren, und wenigstens einer Kamera (10), die derart angeordnet ist, dass sie einen Bereich vor dem Kraftfahrzeug (2) erfasst, wobei die Kamera (10) sensitiv für wenigstens einen Teilbereich des von dem wenigstens einen Projektors (22) ausgegebenen Frequenzspektrums ist, um Reflexionen des von dem Projektor (22) auf den Bereich der Fahrbahn projizierten Lichtes (32) zu erfassen, wobei der Projektor (22) eine modulierbare Leuchtmittelanordnung (23) aufweist, wobei eine Steuerung (12) vorgesehen ist, die mit der wenigstens einen Kamera (10) und dem wenigstens einen Projektor (22) verbunden ist, wobei wenigstens ein Timer (24) vorgesehen ist, um den Projektor (22) und Kamera (10) zu takten, wobei der Projektor (22) vom Timer (24) gesteuert gepulst betrieben wird, wobei die Steuerung (12) ein Auswertemodul (14) für Kameradaten aufweist, das dazu eingerichtet ist, Kameradaten von einem ersten Pulszustand und von einem zweiten Pulszustand getrennt voneinander auszuwerten,
**dadurch gekennzeichnet, dass**
das Auswertemodul (14) ausgebildet ist, überlappende Bereiche in den wenigstens zwei Kameraaufnahmen zu identifizieren und Spurmarkierungen (28) in den Kameraaufnahmen zu erkennen,
wobei die Steuerung (12) ausgebildet ist, eine Veränderung der Lichtstrukturen (32) vorzunehmen, wenn ein Zuversichtsniveau für die Erkennung von Spurmarkierungen (28) unter einen vorgegebenen Wert sinkt.

2. Umgebungserkennungssystem nach Anspruch 1, wobei die Steuerung (12) ein Lichtmodulationsmodul (20) aufweist, das dazu eingerichtet ist, das von dem Projektor (22) emittierte Licht zu modulieren, sodass der Projektor (22) wenigstens eine erste Lichtstruktur (32) und wenigstens eine von der ersten Lichtstruktur (32) unterschiedliche zweite Lichtstruktur emittieren kann, wobei das Umschalten zwischen erster Lichtstruktur (32) und zweiter Lichtstruktur (32) mittels des Timers (24) gesteuert ist.

3. Umgebungserkennungssystem nach einem der vorangegangenen Ansprüche, wobei ein Lichttimer (24) für den Projektor (22) und ein Abtastratentimer (24) für die Kamera (10) vorgesehen ist.

4. Umgebungserkennungssystem nach einem der vorangegangenen Ansprüche, wobei eine Taktfrequenz des Lichttimers (24) ein ganzzahliges Vielfaches einer Taktfrequenz des Abtastratentimers (24) oder eine Taktfrequenz des Abtastratentimers (24) ein ganzzahliges Vielfaches einer Taktfrequenz des Lichttimers (24) ist.

5. Umgebungserkennungssystem nach einem der Ansprüche 1 bis 3, wobei eine Taktfrequenz des Lichttimers (24) ein nicht ganzzahliges Vielfaches einer Taktfrequenz des Abtastratentimers (24) oder eine Taktfrequenz des Abtastratentimers (24) ein nicht ganzzahliges Vielfaches einer Taktfrequenz des Lichttimers (24) ist.

6. Verfahren zum Betrieb eines Umgebungserkennungssystems eines Kraftfahrzeugs (2) nach einem der vorangegangenen Ansprüche, wobei eine Lichtstruktur (32) mit einem Projektor (22) auf einen Bereich einer Fahrbahn vor dem Kraftfahrzeug (2) projiziert wird, wobei der Projektor (22) gepulst betrieben wird, wobei von der wenigstens einen Kamera (10) Aufnahmen von dem Bereich vor dem Kraftfahrzeug (2) aufgenommen werden, wobei wenigstens eine Kameraaufnahme in einem ersten Pulszustand von der Steuerung (12) ausgewertet wird, wobei wenigstens eine Kameraaufnahme in einem zweiten Pulszustand von der Steuerung (12) ausgewertet wird, wobei Unterschiede zwischen der Kameraaufnahmen des ersten Pulszustand und des zweiten Pulszustands erkannt und ausgewertet werden, wobei überlappende Bereiche in den wenigstens zwei Kameraaufnahmen identifiziert und Spurmarkierungen (28) in den Kameraaufnahmen erkannt werden, **dadurch gekennzeichnet, dass** eine Veränderung der Lichtstrukturen (32) vorgenommen wird, wenn ein Zuversichtsniveau für die Erkennung von Spurmarkierungen (28) unter einen vorgegebenen Wert sinkt.

7. Verfahren nach Anspruch 6, wobei in einem gegebenen Zeitintervall der erste Pulszustand für 90 % bis 99 % der Zeit vorherrscht, wobei der zweite Pulszustand für die verbleibende Zeit vorherrscht.

8. Verfahren nach einem der Ansprüche 6 und 7, wobei eine Abtastrate der wenigstens einen Kamera (10) mit einer Taktfrequenz des Projektors (22) synchronisiert wird.

9. Verfahren nach einem der Ansprüche 6 bis 8, wobei eine Abtastrate der wenigstens einen Kamera (10) und eine Taktfrequenz des Projektors (22) asynchron sind.

10. Computerprogrammprodukt, mit einem computerlesbaren Speichermedium (16), auf dem Befehle eingebettet sind, die, wenn sie von wenigstens einer Steuerung (12) eines Umgebungserkennungssystems nach Anspruch 1 ausgeführt werden, bewirken, dass die wenigstens eine Steuerung (12) dazu eingerichtet ist, das Verfahren nach einem der Ansprüche 6-9 auszuführen.

11. Kraftfahrzeug mit einem Umgebungserkennungssystem nach einem der Ansprüche 1 bis 5.

## Claims

1. Environment detection system of a motor vehicle (2), comprising at least one projector (22) adapted to project linear light structures (32) onto a region of a roadway (36) in front of the motor vehicle (2), and at least one camera (10) arranged to detect a region in front of the motor vehicle (2), wherein the camera (10) is sensitive to at least a partial region of the frequency spectrum output by the at least one projector (22) in order to detect reflections of the light (32) projected by the projector (22) onto the region of the roadway, wherein the projector (22) comprises a modulatable illuminant arrangement (23), wherein a controller (12) is provided, which is connected to the at least one camera (10) and the at least one projector (22) is connected, wherein at least one timer (24) is provided for clocking the projector (22) and camera (10), wherein the projector (22) is operated in a controlled pulsed manner by the timer (24), wherein the controller (12) has an evaluation module (14) for camera data, which is adapted to evaluate camera data from a first pulse state and from a second pulse state separately from one another, **characterised in that** the evaluation module (14) is designed to identify overlapping regions in the at least two camera images and to recognise track markers (28) in the camera images, wherein the controller (12) is adapted to perform a change of the light structures (32) drops below a predetermined value for the recognition of track markings (28).

2. Environment detection system according to claim 1, wherein the controller (12) comprises a light modulation module (20) adapted to modulate the light emitted from the projector (22) so that the projector (22) can emit at least one first light structure (32) and at least one second light structure different from the first light structure (32), wherein switching between the first light structure (32) and the second light structure (32) is controlled by the timer (24).

3. Environment detection system according to any preceding claim, wherein a light timer (24) is provided for the projector (22) and a sample rate timer (24) is provided for the camera (10).

4. Environment detection system according to any preceding claim, wherein a clock frequency of said light timer (24) is an integer multiple of a clock frequency of said sampling rate timer (24) or a clock frequency of said sampling rate timer (24) is an integer multiple of a clock frequency of said light timer (24).

5. Environment detection system according to any one of claims 1 to 3, wherein a clock frequency of the light timer (24) is a non-integer multiple of a clock frequency of the sampling rate timer (24) or a clock frequency of the sampling rate timer (24) is a non-integer multiple of a clock frequency of the light timer (24).

6. Method for operating an environment recognition system of a motor vehicle (2) according to one of the preceding claims, wherein a light structure (32) with a projector (22) is projected onto a region of a roadway in front of the motor vehicle (2), wherein the projector (22) is operated in a pulsed manner, wherein images of the region in front of the motor vehicle (2) are taken by the at least one camera (10), wherein at least one camera image is evaluated in a first pulse state by the control (12), wherein differences between the camera images of the first pulse state and the second pulse state are recognised and evaluated, wherein overlapping regions in the at least two camera images are identified and track markings (28) are thereby recognised in the camera images, **characterised in that** a change in the light structures (32) is carried out when a level of confidence for the recognition of track markings (28) drops below a predetermined value.

7. Method according to claim 6, wherein in a given time interval the first pulse state prevails for 90% to 99% of the time, the second pulse state prevailing for the remaining time.

8. Method according to any one of claims 6 and 7, wherein a sampling rate of the at least one camera (10) with a clock frequency of the projector (22) is synchronised.

9. Method according to any one of claims 6 to 8, wherein a sampling rate of the at least one camera (10) and a clock frequency of the projector (22) are asynchronous.

10. Computer program product comprising a computer readable storage medium (16) on which are embedded instructions which, when executed by at least one controller (12) of an environment recognition system according to claim 1, cause the at least one controller (12) to be adapted to execute the method according to any one of claims 6-9.

11. Motor vehicle with an environment recognition system according to any one of claims 1 to 5.

## Revendications

1. Système de reconnaissance de l'environnement d'un véhicule automobile (2) comprenant au moins un projecteur (22) adapté pour projeter des structures lumineuses linéaires (32) sur une zone d'une voie de circulation (36) devant le véhicule automobile (2), et au moins une caméra (10) disposée pour détecter une zone devant le véhicule automobile (2), la caméra (10) étant sensible à au moins une partie du spectre de fréquences délivré par le projecteur (22) pour réfléchir la lumière projetée par le projecteur (22) sur la zone de la voie de circulation (32) à détecter, dans lequel le projecteur (22) comprend un dispositif d'éclairage modulable (23), une commande (12) étant prévue, qui est reliée à la au moins une caméra (10) et au au moins un projecteur (22), au moins une minuterie (24) étant prévue pour cadencer le projecteur (22) et la caméra (10), le projecteur (22) étant commandé par impulsion de la minuterie (24), la commande (12) comprenant un module d'évaluation (14) pour les données de la caméra qui est conçu pour évaluer les données de caméra séparément d'un premier état d'impulsion et d'un deuxième état d'impulsion, **caractérisé en ce que** le module d'évaluation (14) est conçu pour identifier des zones se chevauchant dans les au moins deux prises de vues de caméra et pour reconnaître des marques de piste (28) dans les prises de vues de caméra, la commande (12) étant conçue pour effectuer une modification des structures lumineuses (32) lorsqu'un niveau de confiance pour la reconnaissance des marques de piste (28) descend en dessous d'une valeur prédéterminée.

2. Système de reconnaissance d'environnement selon la revendication 1, dans lequel le contrôleur (12) comprend un module de modulation de lumière (20) adapté pour moduler la lumière émise par le projecteur (22) de telle sorte que le projecteur (22) puisse émettre au moins une première structure de lumière (32) et au moins une seconde structure de lumière différente de la première structure de lumière (32), la commutation entre la première structure de lumière (32) et la seconde structure de lumière (32) étant commandée au moyen de la minuterie (24).

3. Système de reconnaissance d'environnement selon l'une quelconque des revendications précédentes, dans lequel un minuteur de lumière (24) est prévu pour le projecteur (22) et un minuteur de fréquence d'échantillonnage (24) est prévu pour la caméra (10).

4. Système de reconnaissance d'environnement selon l'une quelconque des revendications précédentes, dans lequel une fréquence d'horloge de l'horloge optique (24) est un multiple entier d'une fréquence d'horloge de l'horloge de fréquence d'échantillonnage (24) ou une fréquence d'horloge de l'horloge de fréquence d'échantillonnage (24) est un multiple entier d'une fréquence d'horloge de l'horloge optique (24).

5. Système de reconnaissance d'environnement selon l'une quelconque des revendications 1 à 3, dans lequel une fréquence d'horloge de l'horloge optique (24) est un multiple non entier d'une fréquence d'horloge de l'horloge de fréquence d'échantillonnage (24) ou une fréquence d'horloge de l'horloge de fréquence d'échantillonnage (24) est un multiple non entier d'une fréquence d'horloge de l'horloge optique (24).

6. Procédé de fonctionnement d'un système de reconnaissance de l'environnement d'un véhicule automobile (2) selon l'une quelconque des revendications précédentes, dans lequel une structure lumineuse (32) est projetée avec un projecteur (22) sur une zone d'une voie devant le véhicule automobile (2), le projecteur (22) étant actionné par impulsions, des clichés de la zone devant le véhicule automobile (2) étant pris par la au moins une caméra (10), au moins un cliché de caméra étant évalué par la commande (12) dans un premier état d'impulsion, au moins un cliché de caméra étant évalué par la commande (12), entre les images de caméra du premier état d'impulsion et du second état d'impulsion, des zones se chevauchant dans les au moins deux images de caméra étant identifiées et des marques de piste (28) étant identifiées dans les images de caméra, **caractérisé en ce qu'**une modification des structures lumineuses (32) est effectuée lorsqu'un niveau de confiance pour la reconnaissance de marques de piste (28) tombe en dessous d'une valeur prédéterminée.

7. Procédé selon la revendication 6, dans lequel, dans un intervalle de temps donné, le premier état d'impulsion prévaut pendant 90 % à 99 % du temps, le second état d'impulsion prévaut pendant le temps restant.

8. Procédé selon l'une quelconque des revendications 6 et 7, dans lequel une fréquence d'échantillonnage de ladite au moins une caméra (10) est synchronisée avec une fréquence d'horloge dudit projecteur (22).

9. Procédé selon l'une quelconque des revendications 6 à 8, dans lequel une fréquence d'échantillonnage de ladite au moins une caméra (10) et une fréquence d'horloge dudit projecteur (22) sont asynchrones.

10. Produit de programme informatique comprenant un support de stockage lisible par ordinateur (16) sur lequel sont incorporées des instructions qui, lorsqu'elles sont exécutées par au moins un contrôleur (12) d'un système de reconnaissance d'environnement selon la revendication 1, font que ledit au moins un contrôleur (12) est agencé pour exécuter le procédé selon l'une quelconque des revendications 6 à 9.

11. Véhicule automobile comportant un système de reconnaissance d'environnement selon l'une quelconque des revendications 1 à 5.
